# EUROPEAN PATENT SPECIFICATION

(11) **EP 2 712 810 B1**
(45) Date of publication and mention of the grant of the patent: **13.04.2016**
(21) Application number: 12186493.8
(22) Date of filing: 28.09.2012
(51) Int. Cl.: B64F 1/20, E01F 9/60, E01F 9/70

(54) **AIRFIELD LIGHT AND MOUNTING BASE THEREFOR**
FLUGFELDLICHT UND MONTAGESOCKEL DAFÜR
LUMIÈRE DE TERRAIN D'AVIATION ET BASE DE MONTAGE DU MÊME

(43) Date of publication of application: 02.04.2014
(73) Proprietor: Hella KGaA Hueck & Co., 59552 Lippstadt (DE)
(72) Inventor: Auras, Klaus, 59556 Lippstadt (DE); Kornfeld, Andre, 33442 Herzebrock-Clarholz (DE)
(74) Representative: Jöstingmeier, Martin

(56) References cited:
- WO-A1-88/07606
- DE-A1- 10 246 144
- US-A- 3 377 930
- US-A- 3 703 855
- US-A1- 2009 297 264

## Description

### Field of the invention

The invention relates to a mounting base for a lighting device to be mounted flush with a pavement, for example for a taxi way light. The mounting base comprises at least a support for being mounted to the ground and a mount for fixing a lighting device.A suspension element is strained if a load for example of a snowplow applied to the lighting device.

### Description of the related art

On airfields as well as on street signaling lights are in some cases mounted almost flush with the surface of the taxiway or street, respectively. Such lighting devices typically have a housing that extends slightly above the ground to emit light via a light exit window in a direction that is at least almost parallel to the ground and thus visible to any person approaching the lighting device more or less parallel to the ground, for example to a driver of a car approaching the lighting device or a pilot of an airplane taxiing towards the lighting device or being in approach for a landing.

The international patent application publication WO 2009/077833 A1 discloses an assembly unit for an airfield light. The airfield light has a pot like housing being mounted at least approximately flush with a taxiway surface. The housing accommodates electronic circuitry and in and particular a switching component for switching a light source. The switching component is covered by a protective cap or can be immersed in a liquid for damping vibrations originating from an impact of aircrafts passing close to the taxiway light or even rolling "i.e. taxiing" over the taxiway light.

US-Patent 6,203,557 B1 teaches a taxiway light having a housing for accommodating a light source, optical elements like prisms and the like for providing a defined light beam exiting the housing and some electric components for driving the light source. The top surface of the housing is mounted slightly above the taxiway surface, i.e. only almost flush. The housing is received in a pot like base and connected to the base via an elastic support ring. The support ring permits the housing to be moved vertically in the base to thereby allow 5 a snow plow to remove snow from the taxiway without spoiling the taxiway light.

Laid open German Patent Application DE 102 46 144 A1 discloses a signaling light for being inserted almost flush with a pavement of a street. The light has housing with an upper part and a lower part for accommodating a light source, optical 10 elements and the like. The lower part of the housing is rigidly mounted to the ground and the upper part is mounted via a suspension element to the lower part. The suspension permits the lower part to move downwards and thereby reduce the mechanical stress exerted by cars or a snowplow on the lighting device and its components.

US-Patent 6,203,557 B1 teaches a taxiway light having a housing for accommodating a light source, optical elements like prisms and the like for providing a defined light beam exiting the housing and some electric components for driving the light source. The top surface of the housing is mounted slightly above the taxiway surface, i.e. only almost flush. The housing is received in a pot like base and connected to the base via an elastic support ring. The support ring enables the housing to be moved vertically in the base to thereby allow a snow plow to remove snow from the taxiway without spoiling the taxiway light.

US 2009/297264 A1, which is considered to be the closest prior art, discloses a underfloor road marker with a two-piece enclosure. In the enclosure a lighting device is movably supported. The housing has a first surface forming a linear bearing with a second surface of said lighting device. The slider has the ability to dip under the load for example of an car.

Further, US 3 703 855 A discloses a road marker which is designed as underfloor system. The road marker comprises a receptacle, forming a box, with a bottom and an annular rim. A fixture supporting member with a lamp mounting supporting contains an incandescent bulb. The fixture supporting member is mounted via an annular resilient diaphragm to the receptacle in a way so that the inner module is quickly adjustable under load from above.

### Summary of the invention

The problem to be solved by the invention is to provide a base for a taxiway light with an enhanced lifespan.

A solution of the problem is provided by a base for lighting device as defined in claim 1. The dependent claims relate to further improvements of the invention.

The base for a lighting device, for example a taxiway light comprises at least a support, which may be mounted to the ground. The base has a mount that is vertically movable relative to the support between an upper position and a lower position. A lighting device, for example a taxiway light is mounted to the mount. The lighting device is an encapsulated unit, having its own housing. The 25 upper position of the mount preferably corresponds to the lighting position of the lighting device. In the lighting position the lighting device protrudes slightly over the pavement, just sufficient to emit the light as intended. A suspension element may be provisioned to ensure that the unloaded lighting device is in its upper lighting position. In other words the mount for carrying the lighting device can be moved downwards against the repelling force of the suspension element. Preferably the movement is downward movement only. Preferably, the mount is linearly guided between an upper and a lower position.

If the pavement, e.g. a taxiway, is cleaned with a snowplow the snowplow exerts a downward force on the lighting device, thus the mount and the lighting device move downwards against a restoring force of the suspension element, until the upper surface area of the lighting device is flush with the pavement, i.e. they are moved in their respective flush positions. If the mount is positioned below the lighting device, the flush position of the mount is accordingly below the flush position of the lighting device. In other words the flush position of the mount is the position in which the lighting device is flush with the pavement. After the snowplow passed and cleaned the lighting device, the suspension element ensures that the mount and thus the lighting device move upwards in their respective upper positions.

According to a preferred embodiment is the lower position of the mount is below its flush position, i.e., below its position corresponding to the position where the upper surface area of the lighting device is flush with the pavement. This permits the lighting device to be moved totally below the pavement, thereby reducing the mechanical stress on the lighting device and thus enhancing its lifetime.

Summarizing, that base has at least vertically movable mount for lighting device, e.g. taxiway light. The mount has at least an upper position corresponding to a working position of the lighting device. The working position is the preferred position of the lighting device for signaling or lighting. Additionally the mount has a lower position, in which the up facing surface of the lighting device is preferably below a flush position of the lighting device. Thus the lighting device may hide inside the base and the load being excerted by a taxiing plane, a truck or the like on the lighting device is reduced.

The invention is based on the observation that taxiway lights are subjected to a downward force by snowplows as well as by wheels of airplanes rolling, i.e. taxiing over the taxiway light. The load being exerted on the taxiway light by a snowplow is different from the load being exerted by typical airplanes. The taxiway lights of the prior art may move downward until the upper surface area of the taxiway light is flush with the taxiway. Thus, if a plane is taxing over the taxiway light the plane pushes the taxiway light down until it is flush with the taxiway. Now the taxiway light is blocked and has to carry the full load as applied by the respective wheel. According to the invention, however, the lighting device may move even lower than said flush position, thereby reducing the load being exerted by the respective wheel as explained below in more detail. The mechanical stress applied to the lighting device by airplanes taxiing over the lighting device is reduced, as the base permits the lighting device to move downwards below the position which is sufficient for snowplow to slide over the upper surface of the lighting device, thereby enhancing the light's lifespan.

The suspension element is arranged between the mount and a support. Between means here that that a lifting or downward force being applied to the mount is transferred via the suspension element to the support of the base, yielding a deflected suspension element. The suspension element may be coupled directly to the mount and the support. As alternative there may be additional constructional elements for guiding and/or spacing the mount and the suspension element positioned between the support and the suspension element or between the suspension element and the mount. For example one or more rods and/or sliders, and/or a slider ring and/or intermediate plates may be arranged to transmit a force between the mount and the suspension element or between the suspension element and the support. Examples of such indirect coupling between the mount and the suspension element are explained below in more detail.

Preferably, the suspension element has a force versus deflection curve having a first section with a first slope which is preferably adapted to the load applied by a snowplow. The lifting force of the lighting device is the restoring force of the suspension element minus its load due to the weight of the mount and possible other parts to be lifted by the suspension element (the lighting device and e.g. bolts for fastening the lighting device to the mount). The lifting force of the first section of the force versus deflection curve is preferably just sufficient to safely lift the lighting device into its lighting means working position. This permits the lighting device to be retracted into its flush position by exerting only a comparative small downward force. Thus, the lighting device being mounted to the base may easily reach its flush position and a snowplow may slide ("flush") over the lighting device. The force versus deflection curve of the suspension element preferably has a second section with a second slope, the second slope preferably being bigger, i.e. steeper, than the first slope. This second section preferably corresponds to a movement of the mount below its flush position. Thereby the downward movement of the mount and the lighting device can be slowed down, before the mount reaches its lower position. The mechanical stress to the lighting device and the mount is thus further reduced.

Between the support and the mount is at least one suspension element being strained according to a force versus deflection curve when moving the mount downwards its upper position towards its lower position. Preferably the suspension element has force versus deflection curve with a first section having a first slope and a second section having a second slope, the first slope being smaller that the second slope. The first slope may be adapted for example to the force being exerted by a snowplow via the lighting device to the mount such that the mount is moved downwards, until the lighting device is flush with the pavement. Now the mount and the lighting device are in so called flush positions, as explained above. If a plane is taxiing over the lighting device, the mount moves even lower, i.e., below its flush position to thereby reduce the force exerted by the plane to the taxiway light. Below this flush position the slope of the force versus deflection curve may be steeper than above the flush position, thereby the mechanical stress on the lighting device can be further reduced and its lifetime is further enhanced.

Preferably, the suspension element has at least a first stage with a first force versus deflection curve. The mount may be coupled to a first end of the first stage and a first block preferably limits a deformation of the "soft" first stage, thereby defining a maximum deflection of the first stage. The first stage may compensate a first part of a downward force, e.g. of taxiing plane. The block ensures that the possible deformation of the first stage remains in its elastic regime and thus protects the first stage. The second part of the force, which is not compensated by the first stage is applied via the block to a second stage of the suspension element, having a second force versus deflection curve. To this end the second stage is coupled to the block. Such a suspension element can be manufactured at very low costs by stacking two disc springs, having two different force versus deflection curves with different slopes.

Preferably, the support comprises at least one linear guide for at least one rod, the rod being positioned between the mount and the suspension element for transmitting a force exerted on the mount to the suspension element. This permits to bear the mount very efficiently.

Alternatively or additionally the mount may be linearly guided e.g. by at least one slider being slideably mounted in at least one recess and/or space. For example may the mount being stacked upon a slider ring having at least one, for example three or four protrusions extending inwardly and/or outwardly with respect to the ring axis. These protrusions may engage like sliders into complementary spaces linearly guiding the protrusions, thereby forming a linear guide. The spaces may be integrally formed in a housing of the base and/or being formed by spaces between e.g. ring segments that are at least indirectly attached to the housing of the base.

Preferably, the base has an intermediate plate being positioned between the at least one rod and the suspension element. The at least one rod transmits the force exerted to the mount to the at least one vertically movable intermediate plate. This permits to collect the forces being transmitted by multiple rods, e.g. three rods to only a single suspension element. In case the mount is linearly guided by at least one protrusion, the intermediate plate may preferably be positioned below the protrusions and/or the ring with the at least one protrusion leading as well to a collection of the forces being provided to the suspension element.

The base may have at least one protrusion with at least one recess for linearly guiding the at least one rod. In the recess may be a bush bearing for bearing the rod. This permits to safely strut apart tilting moments and an angular momentum being transferred from the lighting device to the mount.

Preferably, the at least one protrusion (and/or a further protrusion) of the support has at least one surface blocking a further downward movement of the mount when the mount is moved in said lower position.

The at least one protrusion (and/or a further protrusion) preferably has at least one surface blocking an upward movement of at least one of said rods and/or said intermediate plate when the mount reaches said upper position. This permits to precisely define the upper position of the mount with a high repeat accuracy. The surface may for example block the movement of an intermediate plate on top of which may be at least one of said at least one rod. Thereby the upper position of the mount and thus the lighting device can be precisely and simply defined.

The base permits by simply fixing a signaling lighting device, to obtain a suspended lighting device, that has an enhanced lifecycle and thereby to reduce maintenance costs.

### Description of Drawings

In the following the invention will be described by way of example, without limitation of the general inventive concept, on examples of embodiment with reference to the drawings.
Figure 1 shows a cross section of a base and a signaling light.
Figure 2 shows an exploded view of the base of Fig. 1.
Figure 3 shows a cross section of a base and a signaling light in a flush position.
Figure 4 shows a cross section of a base and a signaling light being moved below the flush position.
Figure 5 shows a cross section of a base and a signaling light.
Figure 6 shows an exploded view of the base of Fig. 5s.
Figure 7 shows a force versus deflection curve of a suspension element.

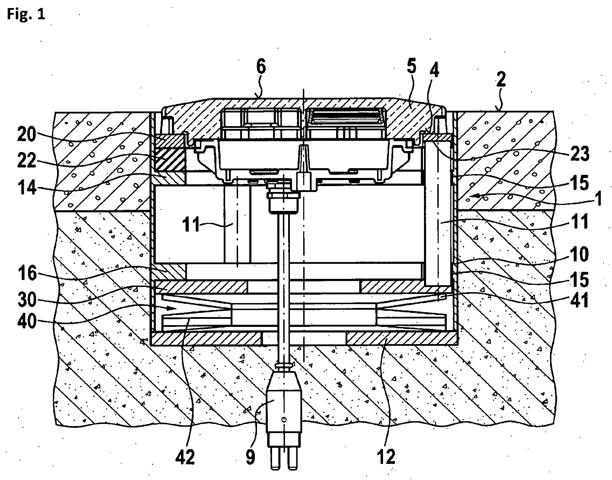

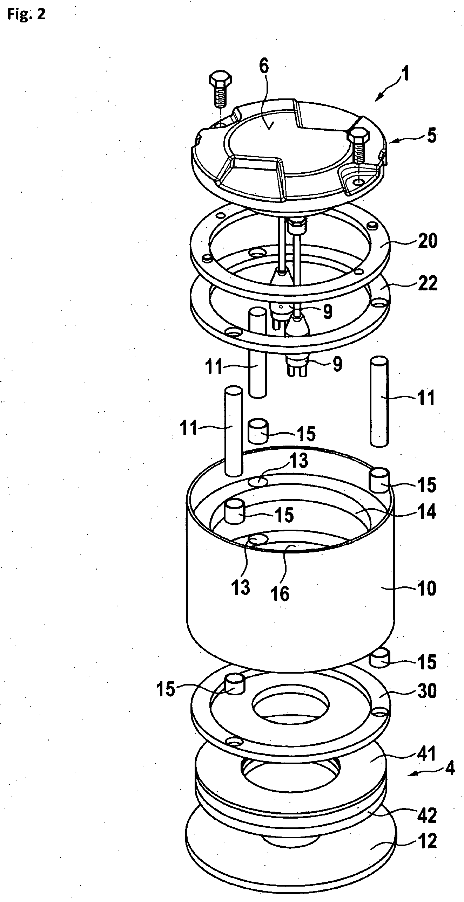

The base 1 in figure 1 supports as example a taxiway light 5. The taxiway light 5 is a sealed module (see as well Fig. 2) that can be fixed for example by bolts to a mount 20 of the base and only needs to be connected to a power source via the depicted connector 9.

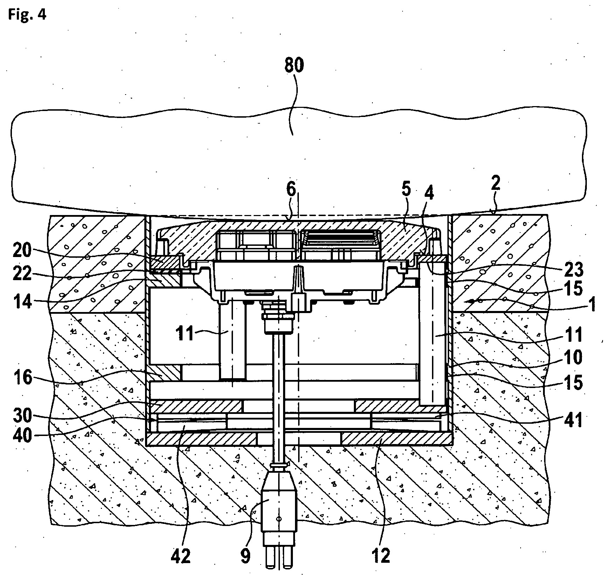

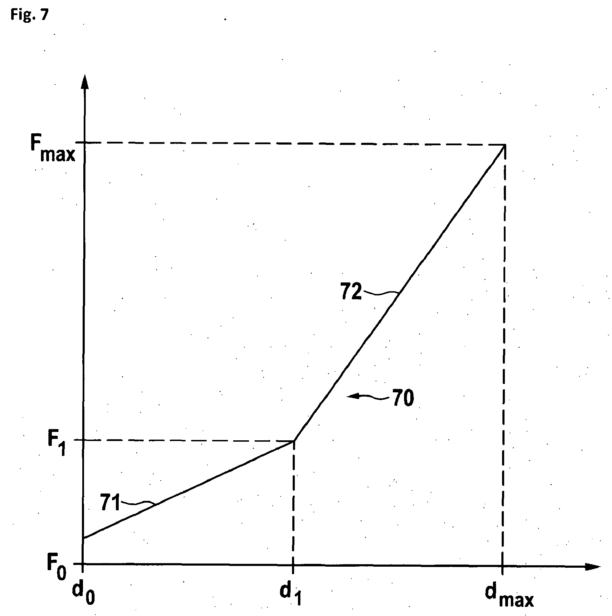

The base in Fig. 1 is installed flush with a pavement of a taxiway and has a cylindrical housing body 10 with a ring shaped bottom plate 12 as support. The bottom plate 12 supports on its up facing side a suspension element 40. The suspension element 40 has a first stage 41, which is in the depicted example a first disc spring 41 having a first force versus deflection curve 71 (see Fig. 7) and a second stage 42, which is in the depicted example a second disc spring 42 having a second force versus deflection curve 72 (see Fig. 7). The disc springs 41, 42 have opposed curvatures and their center portions are connected. On top of the first stage 41 is a ring shaped intermediate plate 30 which can be moved downward, i.e. towards the bottom plate 12 against the restoring force of the suspension element 40.The intermediate plate 30 abuts against a down facing surface of a ring like protrusion 16, acting as block stop and preventing a further upward movement of the intermediate plate 30. When pushing the mount downwards, as depicted and explained in more detail with respect to Fig. 4, the intermediate plate 30 first deflects the first stage 41 until the intermediate plate 30 abuts the incompressible center of the first stage 41. Thus, the compression of the first stage 41 is blocked by its incompressible center and thus acts as block stop preventing overstressing the first stage 41. Any additional force this means any force being bigger than the force which is necessary to move the intermediate plate 30 into touch with the incompressible center is applied by the intermediate plate 30 via the incompressible center directly to the second stage 42. In the shown example are the first and second stages 41, 42 of the suspension element 40 and as well the intermediate plate ring like. To obtain the above explained simple but reliable block of the first stage 41 the inner diameter of the intermediate plate 30 is chosen to be smaller than the inner diameter of the first stage 41. Alternatively other types of suspension elements may be used as well.

On the upper facing side of the intermediate plate are three rods 11 (see as well Fig. 2), vertically extending via recesses 13 through said protrusion 16 and a further upper protrusion 14. Bush bearings 15 are inserted in the recesses 13 as linear guides for the rods 11. On top of the rods 11 is a ring shaped mount 20 to which the lighting device 5 is fixed by bolts. The position of the lighting device 5 to the mount 20 is defined by a lower seat surface 4 being attached to the upper surface of the mount 20. Between a down facing side of the mount 20 and the up facing side of the upper protrusion 14 is an elastic gasket 22 for sealing the housing.

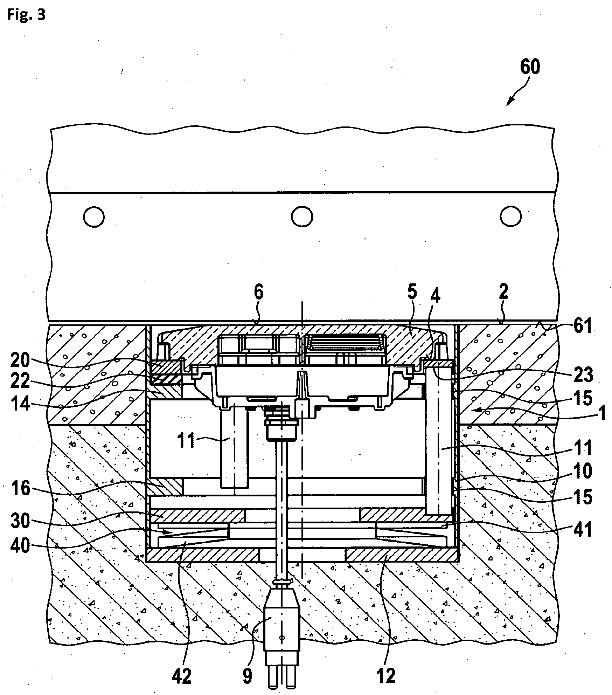

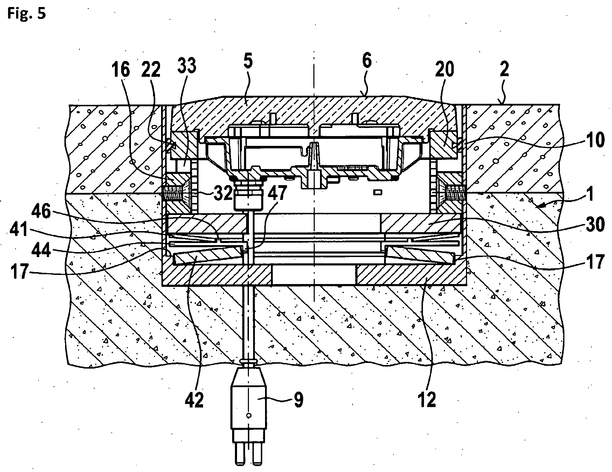

Figure 3 displays the situation occurring when a snow plow 60 cleans a taxiway and thereby moves over the upper surface 6 of the taxiway light 5. Snowplow 60 has a lower lip 61 exerting a downward force on the taxiway light 5 and pushing the taxiway light 5 into the base 1 against a restoring force of the suspension element 40, until the upper surface 6 is at least approximately flush with the pavement surface 2. When pushing down the taxiway light 5, the downward force is transmitted by seat surface 4 of the taxiway light 5 via the mount 20 to the rods 11. The rods 11 transmit the downward force via the intermediate plate to the suspension element 40, which is deflected according to its load versus deflection curve, for example according to load versus deflection curve as the one depicted in Fig. 5. The intermediate plate 3 ensures that the force transmitted by the rods is not a punctual load on the suspension element 40, but evenly applied to the suspension element 40. The restoring force of the suspension element 40 is as well transmitted via the intermediate plate to the rods 11. The rods 11 transfer the force via the mount to the taxiway light 5. The mount ensures that the restoring force is not applied as punctual load on the taxiway light 5, but evenly distributed.

After the lower lip 61 of the snow plow passed the taxiway light 5, the taxiway light 5 is lifted up by the restoring force of the suspension element 70 in its initial position as depicted in Figure 1. This initial position is defined by the block stop provided by the lower surface of the protrusion 16 and the upper surface of the intermediate plate 30. This provides a high accuracy of repetition of the taxiway light 5, in particular, because the block stop is spaced from the pavement level where dust, sand and the like could reduce the accuracy of repetition.

The taxiway light 5 can be moved up and down only. A rotation of the taxiway light 5 is due to an angular momentum which could be exerted for example by a retarded wheel is prevented by two protrusions 21 of the mount 2 (see Fig. 2) which engage in complementary recesses of the taxiway light 5. The mount 20 may transfer an angular momentum provided by the taxiway light 5 to the rods 11 which engage each in a down facing holding fixture 23 of the mount 20. The angular momentum provided to a taxiway light 5 is thus transferred via the mount 20 and the rods 11 to the housing 10.

In Figure 4 a wheel 80 of an airplane rolls over the taxiway light. Now the taxiway light 5 is pushed downward by a significant higher force than the force provided by the snowplow and the taxiway light is moved below its "flush position" which is depicted in Fig. 3. Due to the higher load and because the wheel may move downwards as well the first and second stages 41, 42 of the suspension element 40 are deflected, in this example compressed. As the taxiway light may move even below the pavement surface 2 the force which is applied to it is lower as if the downward movement of the taxiway light would be blocked in the flush position. Thereby the mechanical stress of the taxiway light and of the lifting mechanism of the base is reduced and their lifetimes are enhanced. The deflection of the first stage of the suspension element 40 that is the first disc spring 41 is limited, as the intermediate plate buts against the incompressible ring shaped center of the first stage 41 of the suspension element. Thus a failure of the base due to an overstressing the first stage 41 can be excluded. When the wheel passed the taxiway light 5, the mount moves is pushed back into its well defined upper position and the light is visibly in the intended sector.

The invention is explained with respect to Fig. 1 to 4 showing a taxiway light as example for lighting device. The invention is however not restricted to bases supporting taxiway light on airfields. The base can for example as well be used for supporting in pavement lights as used on streets, for example to mark lanes in tunnels, crossings or the like.

The lighting device is an encapsulated device, this means it has its own housing and can be delivered ready to mount. The lighting device 5 needs simply to be mounted to the base and connected to the power line using the shown connectors 9. The lighting device 5 can be replaced quickly in case of failure without unmounting the base.

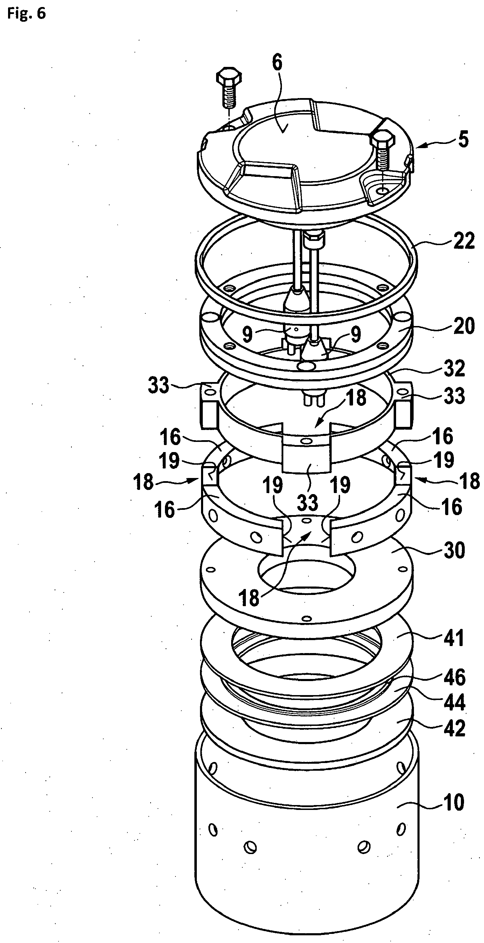

Figures 5 and 6 show a different example of a base for lighting device being similar to the lighting device 5 in Fig. 1 to Fig. 4. The base 1 in figures 5 and 6 as well supports as example a taxiway light 5 as example for a lighting device. Lighting device is a sealed module that can be fixed for example by bolts to a mount 20 of the base and only needs to be connected to a power source via the depicted connector 9.

Again the base in Fig. 5 has a housing to be installed preferably flush with a pavement of a taxiway and has a cylindrical housing body 10 with a ring shaped bottom plate 12 as support. The bottom plate 12 supports on its up facing side a suspension element 40. The suspension element 40 has a first stage 41, which is in the depicted example a first disc spring 41 having a first force versus deflection curve 71 (see Fig. 7) and a second stage 42 (see Fig. 5 and Fig. 6), which is in the depicted example a second disc spring 42 having a second force versus deflection curve 72 (see Fig. 7). Between the two disc springs 41, 42 is a disc ring 44 for centering the two disc springs 41, 42. The disc ring 44 has on its upper side an upper protrusion 46, being ring shaped. The upper protrusion 46 engages into the free center of the first spring disc 41. A further function of the upper protrusion 46 is to act as block stop for an intermediate plate 30 on top of the suspension element 40 and to thereby limit the maximum force that can be loaded to the first disc spring 41. On the lower side of the disc ring 44 is a lower protrusion 45. The lower protrusion 45 engages into the free center of the second disc spring 42 and is thereby centered. The second disc spring 41 is centered in the housing 10 by a step shaped diminuition 17 of the inner diameter of the housing. In particular if the inner diameter of the second disc spring 42 is smaller or equal to the inner diameter of the first disc spring, the disc ring 44 may be omitted. Alternatively other types of suspension elements may be used as well.

The ring shaped intermediate plate 30 can be moved downward, i.e. towards the bottom plate 12 against the restoring force of the suspension element 40.The intermediate plate 30 abuts against a down facing surface of a ring like protrusions 16, acting as block stop and preventing a further upward movement of the intermediate plate 30. As can be seen in Fig. 6, the protrusions 16 are ring segments. The protrusions 16 are fixed to inner surface of the housing 10, e.g. by bolts or by welding). Between the protrusions 16 are spaces 18 with a width being defined by vertical narrow facing sides 19 of the protrusions 16. Sliders 33 of a slider ring 32 engage into the spaces 18. The slider ring 32 and the protrusions 16 thus form a linear guide for the mount 20, which can be firmly attached to the slider ring 32, e.g. by bolts.

When pushing the mount 20 downwards the downward movement is transferred via the slider ring 32 and the intermediate plate 30 to the suspension unit. First the first stage 41 deflects until the intermediate plate 30 abuts the upper protrusion 46. Thus, the compression of the first stage 41 is blocked by the disc ring 44 which thus acts as block stop preventing overstressing the first stage 41. Any additional force this means any force being bigger than the force which is necessary to move the intermediate plate 30 into touch with the upper protrusion 46 is applied by the intermediate plate 30 via the upper protrusion 46 and thus the disc ring 44 "directly" to the second stage 42. The disc ring 44 in this sense bypasses the first disc spring 41 if the force applied to the suspension element exceeds a first threshold.

Figure 7 shows a force versus deflection curve of a suspension element, like for example the suspension element 40 shown in Fig. 1 to 4 or the suspension element 40 in Fig. 5 and 6. The force F is represented in the direction of the axis of ordinates and the deflection d is represented by the axis of abscissa. Referring to Fig. 1 to Fig. 6 the deflection is the absolute value of compression of the suspension element 40, in other words the change of length or height d. The force is the restoring force indicated as "F", being provided by the suspension element having a compression d. The force F versus deflection d curve has a first linear section 71 ranging from (d₀, F₀) to (d₁, F₁). The slope, or in other words the derivative of this section can be considered as a first spring constant, being valid however only for a compression of the suspension element being smaller that d₁. The suspension element is preferably configured such that d₁ is slightly bigger or equal to the compression required to move the mount and thus the lighting device from their respective upper "lighting" positions, corresponding to d₀, into their respective flush positions. This ensures that a snowplow can easily push the lighting device in its flush position. The force versus deflection curve in Fig. 7 has a second linear section 72 ranging from (d₁, F₁) to (dₘₐₓ, Fₘₐₓ). This example force versus deflection curve is thus continuous, but changes its slope discontinuously to a second bigger, this means steeper slope. The second slope is adapted to suspend the load exerted to a lighting device by some wheel rolling over the lighting device, for example a wheel of a plane taxing over the lighting device.

### List of reference numerals

- 1: base
- 2: pavement surface
- 4: seat surface
- 5: light, lighting device, e.g. taxiway light
- 6: upper surface of the light 5
- 9: connector
- 10: housing
- 11: rod
- 12: bottom plate / support
- 13: recess
- 14: protrusion
- 15: bush bearing / linear guide
- 16: protrusion
- 17: diminuition, e.g. step shaped
- 18: space between narrow facing sides of protrusions
- 19: narrow facing sides
- 20: mount
- 21: protrusion of mount21
- 22: gasket
- 23: holding fixture
- 30: intermediate plate
- 32: slider ring
- 33: slider
- 40: suspension element
- 41: first stage / first disc spring
- 42: second stage / second disc spring
- 43: connecting device
- 44: disc ring
- 45: lower protrusion
- 46: upper protrusion
- 60: snowplow
- 61: lower lip of snowplow
- 70: force versus deflection curve
- 71: first section of the force versus deflection curve
- 72: second section of the force versus deflection curve,
- 80: wheel /tire

## Claims

1. Signaling light with a lighting device (5) being an encapsulated unit having its own housing and with a base (1) for supporting said lighting device, wherein the base (1) comprises at least a support (12) for being mounted to the ground, at least one mount (20) for fixing the lighting device (5) and at least one suspension element (40) **characterized in that**
- the mount (20) is linearly guided for permitting a vertical movement of the mount relative to the support (12) between an upper position and a lower position, and
- the suspension element (40) is between the mount (20) and the support (12) and configured to be deflected by a downward force being applied to the mount (20).

2. Signaling light of claim 1
**characterized in that**
the suspension element (40) has force versus deflection curve (70) with a first section (71) having a first slope and a second section (72) having a second slope, the first slope being smaller than the second slope.

3. Signaling light of claim 1 or 2,
**characterized in that**
- the suspension element (40) has at least a first stage (41) with a first force versus deflection curve and a first block limiting a deformation of the first stage (41),
- the suspension element (40) has at least a second stage (42) with a second force versus deflection curve and being coupled to the block,
- the mount (20) is coupled via the block to the second stage (42), in case the block limits the deformation of the first stage (41).

4. Signaling light of any one of claims 1 to 3,
**characterized in that**
the support (12) comprises at least one linear guide (15) for at least one rod (11) or slider (33), the rod (11) or slider (33) being positioned between the mount (20) and the suspension element (40) for transmitting a force exerted on the mount (20) to the suspension element (40).

5. Signaling light of claim 4,
**characterized in that**
the at least one rod (11) or slider (33) transmits the force exerted to the mount (20) to at least one vertically movable intermediate plate (30), the intermediate plate (30) being positioned between the at least one rod (11) or slider (33) and the suspension element (40).

6. Signaling light of claim 3 or 4,
**characterized in that**
the base (1) has at least one protrusion (14, 16) with at least one recess (13) or space (18) for linearly guiding the at least one rod (11).

7. Signaling lightof claim 5,
**characterized in that**
the at least one protrusion (14, 16) has at least one surface blocking a downward movement of the mount (20) when the mount (20) is moved in said lower position.

8. Signaling light of any one claims 4 to 7,
**characterized in that**
at least one protrusion (14, 16) has at least one surface blocking an upward movement of at least one of said at least one rod (11) and/or said intermediate plate (30) when
the mount (20) reaches said upper position.

9. Signaling light of at least one of the claims 1 to 8,
**characterized in that**
the suspension element (40) comprises a first disc spring (41) a as first stage and a second disc spring (42) as second stage.

10. Signaling light of at least one of the claims 1 to 9,
**characterized in that**
the lighting device (5) is attached to a mount (20) of the base (1).

11. Signaling light of claim 10,
**characterized in that,**
the lighting device has a housing for at least one light emitting element.

## Patentansprüche

1. Signallicht mit einer Beleuchtungsvorrichtung (5), welche eine eingekapselte Einheit mit seinem eigenen Gehäuse ist, und mit einer Grundplatte (1) zum Tragen der Beleuchtungsvorrichtung, wobei die Grundplatte (1) zumindest eine Halterung (12) umfasst, um am Boden montiert zu werden, zumindest eine Befestigung (20), um die Beleuchtungsvorrichtung (5) zu befestigen, und zumindest ein Aufhängungselement (30) umfasst,
**dadurch gekennzeichnet, dass**
- die Befestigung (20) linear geführt wird, um eine bezüglich der Halterung (12) senkrechte Bewegung der Befestigung zwischen einer oberen und einer unteren Position zu ermöglichen, und
- das Aufhängungselement (20) sich zwischen der Befestigung (20) und der Halterung (12) befindet und konfiguriert ist, um durch eine auf die Befestigung (20) wirkende Abwärtskraft verformt zu werden.

2. Das Signallicht gemäß Anspruch 1,
**dadurch gekennzeichnet, dass**
das Aufhängungselement (40) eine Kraft gegen Verformungskurve (70) hat, mit einem ersten Abschnitt (71) aufweisend ein erstes Gefälle (71) und einen zweiten Abschnitt (72) aufweisend ein zweites Gefälle hat, wobei das erste Gefälle kleiner ist als das zweite Gefälle.

3. Signallicht gemäß Anspruch 1 oder 2,
**dadurch gekennzeichnet, dass**
- das Aufhängungselement (40) zumindest eine erste Stufe (41) mit einer ersten Kraft gegen Verformungskurve hat und einen ersten Block, welcher die Verformung der ersten Stufe (41) begrenzt,
- das Aufhängungselement (40) zumindest eine zweite Stufe (42) mit einer zweiten Kraft gegen Verformungskurve hat, und die zweite Stufe an den Block gekoppelt ist,
- die Befestigung (20) über den Block an die zweite Stufe (42) gekoppelt ist, falls der Block die Verformung der ersten Stufe (41) begrenzt.

4. Signallicht nach einem der Ansprüche 1 bis 3,
**dadurch gekennzeichnet, dass**
die Halterung (12) zumindest eine lineare Führung (15) umfasst, für zumindest eine Stange (11) oder einen Läufer (33), wobei die Stange (11) oder der Läufer (33) zwischen
der Befestigung (20) und dem Aufhängungselement (40) positioniert ist, um eine auf die Befestigung (20) ausgeübte Kraft auf das Aufhängungselement (40) zu übertragen.

5. Signallicht gemäß Anspruch 4,
**dadurch gekennzeichnet, dass**
die zumindest eine Stange (11) oder ein Läufer (33) eine auf die Befestigung (20) ausgeübte Kraft auf zumindest eine vertikal bewegliche Zwischenplatte (30) überträgt, wobei die Zwischenplatte (30) zwischen der zumindest einen Stange (11) oder dem zumindest einen Läufer (33) und der Aufhängung (40) angeordnet ist.

6. Signallicht gemäß Anspruch 3 oder 4,
**dadurch gekennzeichnet, dass**
die Grundplatte (1) zumindest einen Vorsprung (14, 16) mit zumindest einer Vertiefung (13) oder einem Zwischenraum (18) zum linearen Führen der zumindest einen Stange hat.

7. Signallicht gemäß Anspruch 5,
**dadurch gekennzeichnet, dass**
der zumindest eine Vorsprung (14, 16) zumindest eine Oberfläche hat, welche eine Abwärts-Bewegung der Befestigung (20) blockiert, wenn die Befestigung (20) in die untere Position bewegt wird.

8. Signallicht gemäß einem der Ansprüche 4 bis 7,
**dadurch gekennzeichnet, dass**
der zumindest eine Vorsprung (14, 16) zumindest eine Oberfläche hat, welche eine Aufwärts-Bewegung von zumindest einem von der zumindest einen Stange (11) und/oder der Zwischenplatte (30) blockiert, wenn die Befestigung (20) die obere Position erreicht.

9. Signallicht gemäß zumindest einem der Ansprüche 1 bis 8,
**dadurch gekennzeichnet, dass**
das Aufhängungselement (40) eine erste Tellerfeder (41) als erste Stufe und eine zweite Tellerfeder (42) als zweite Stufe umfasst.

10. Signallicht gemäß zumindest einem der Ansprüche 1 bis 9,
**dadurch gekennzeichnet, dass**
die Beleuchtungsvorrichtung (5) an einer Befestigung (20) der Grundplatte (1) angebracht ist.

11. Signallicht gemäß Anspruch 10,
**dadurch gekennzeichnet, dass**
die Beleuchtungsvorrichtung ein Gehäuse für zumindest ein Leuchtelement hat.

## Revendications

1. Une lampe de signalisation avec un dispositif d'éclairage (5) étant une unité encapsulée ayant son propre boîtier et avec une base (1) pour soutenir ledit dispositif d'éclairage, où la base (1) comprend au moins un support (12) pour être monté au sol, au moins un montage (20) pour fixer le dispositif d'éclairage (5) et au moins un élément de suspension (40) **caractérisée en ce que**
- le montage (20) est guidé linéairement pour permettre un mouvement vertical du montage par rapport au support (12) entre une position supérieure et une position inférieure, et
- l'élément de suspension (40) se trouve entre le montage (20) et le support (12) et configuré pour être dévié par une force vers le bas étant appliquée sur le montage (20).

2. Une lampe de signalisation de la revendication 1
**caractérisée en ce que**
l'élément de suspension (40) possède une courbe de force par rapport à la déviation (70) avec une première section (71) ayant une première pente et une deuxième section (72) ayant une deuxième pente, la première pente étant plus petite que la deuxième pente.

3. Une lampe de signalisation de la revendication 1 ou 2,
**caractérisée en ce que**
- l'élément de suspension (40) possède au moins un premier étage (41) avec une première courbe de force par rapport à la déviation et un premier bloc limitant une déformation du premier étage (41),
- l'élément de suspension (40) possède au moins un deuxième étage (42) avec une deuxième courbe de force par rapport à la déviation et étant raccordé au bloc,
- le montage (20) est raccordé au moyen du bloc au deuxième étage (42) au cas où le bloc limiterait la déformation du premier étage (41).

4. Une lampe de signalisation de l'une des revendications 1 à 3,
**caractérisée en ce que**
le support (12) comprend au moins un guide linéaire (15) pour au moins une tige (11) ou glissière (33), la tige (11) ou glissière (33) étant positionnée entre le montage (20) et l'élément de suspension (40) pour transmettre une force exercée sur le montage (20) à l'élément de suspension (40).

5. Une lampe de signalisation de la revendication 4,
**caractérisée en ce que**
au moins une tige (11) ou glissière (33) transmet la force exercée sur le montage (20) à au moins une plaque intermédiaire verticalement amovible (30), la plaque intermédiaire (30) étant positionnée entre au moins une tige (11) ou glissière (33) et l'élément de suspension (40).

6. Une lampe de signalisation de la revendication 3 ou 4,
**caractérisée en ce que**
la base (1) possède au moins une saillie (14, 16) avec au moins un creux (13) ou un espace (18) pour guider de façon linéaire au moins une tige (11).

7. Une lampe de signalisation de la revendication 5,
**caractérisée en ce que**
au moins une saillie (14, 16) possède au moins une surface bloquant un mouvement vers le bas du montage (20) lorsque le montage (20) est déplacé dans ladite position inférieure.

8. Une lampe de signalisation de l'une des revendications 4 à 7,
**caractérisée en ce que**
au moins une saillie (14, 16) possède au moins une surface bloquant un mouvement vers le haut d'au moins une desdites tiges (11) et/ou de ladite plaque intermédiaire (30) lorsque le montage (20) atteint ladite position supérieure.

9. Une lampe de signalisation d'au moins une des revendications 1 à 8,
**caractérisée en ce que**
l'élément de suspension (40) comprend un premier ressort de disque (41) en tant que premier étage et un deuxième ressort de disque (42) en tant que deuxième étage.

10. Une lampe de signalisation d'au moins une des revendications 1 à 9,
**caractérisée en ce que**
le dispositif d'éclairage (5) est fixé à un montage (20) de la base (1).

11. Une lampe de signalisation de la revendication 10,
**caractérisée en ce que**
le dispositif d'éclairage possède un boîtier pour au moins un élément émetteur de lumière.
